(19) **Europäisches Patentamt European Patent Office Office européen des brevets**

(11) **EP 4 309 863 B1**

(12) **EUROPEAN PATENT SPECIFICATION**

(45) Date of publication and mention of the grant of the patent:
**19.11.2025 Bulletin 2025/47**

(21) Application number: **22185483.9**

(22) Date of filing: **18.07.2022**

(51) International Patent Classification (IPC):
**B29C 44/46** (2006.01)   **B29B 7/58** (2006.01)
**B29C 44/34** (2006.01)   **B01F 23/20** (2022.01)
**B05C 5/02** (2006.01)

(52) Cooperative Patent Classification (CPC):
**B29C 44/462; B29C 44/348; B29C 44/461;**
B29B 7/728; B29B 7/7404

(54) **VARIABLE SLOT GATEBAR AND IMPROVED FROTHING AND REACTIVE RESINS VEIL RELEASING SYSTEM**

VARIABLER SCHLITZGATTERSCHIEBER UND VERBESSERTES SYSTEM ZUM AUFSCHÄUMEN UND ABLÖSEN DES SCHLEIERS VON REAKTIVEN HARZEN

BARRE D'ACCÈS À FENTE VARIABLE ET SYSTÈME AMÉLIORÉ DE DÉGAGEMENT DU VOILE DE RÉSINES RÉACTIVES ET MOUSSANTES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.01.2024 Bulletin 2024/04**

(73) Proprietor: **Cannon Viking Ltd.**
**Manchester M32 0TL (GB)**

(72) Inventors:
• **VOLPATO, Marco**
 **20121 Milano (IT)**

• **HEYWOOD, Paul**
 **Manchester M32 0TL (GB)**
• **CORTI, Maurizio**
 **22100 Como (IT)**

(74) Representative: **Botti & Ferrari S.p.A.**
**Via Cappellini, 11**
**20124 Milano (IT)**

(56) References cited:
**EP-A2- 0 039 041**   **CN-B- 103 538 231**
**JP-A- S 612 522**   **US-A- 4 844 004**
**US-A1- 2013 020 737**

## Description

Technical field

The present invention is generally directed to the field of system for frothed or pre-expanded polyurethane mixtures as well as releasing a veil of reactive resins in the continuous production of rigid and flexible polyurethane foams, particularly to produce flexible foam slab stocks, or rigid foam panels.

Even more particularly, the present invention relates to systems adapted to control the releasing of pressure and the releasing shape of the polyurethane reactive resin.

Prior art

Generally, in the polyurethane foam technology carbon dioxide is the gas that is developed during the foam growing and that is responsible for the formation of the foam cellulation.

In the foam $CO_2$ is formed during the reaction between polyol and isocyanate due to part of the reaction of the isocyanate with water added by purpose to the polyol.

The reaction of $H_2O$ with the isocyanate is forming the so-called "chemical $CO_2$" that is one of the bases for the foam formation, but the reaction also produces urea molecules that give to the foam a certain hardness, which is not always welcome, because it introduces some constraints in the foam lightness and softness.

It is well known that it is possible to reduce the water content by including into the polyol some physical blowing agent that aids the expansion.

The blowing agents can be gasses or liquids with a boiling point not so far from room temperature. They are dispersed or dissolved inside the polyol and are released during the reaction due to reduced solubility and increasing of temperature caused by the reaction itself.

As the $CO_2$ is a polar molecule, it is easily dissolved in many liquids, including the polyol, under some pressure. The $CO_2$ can be dispersed and dissolved inside the polyol matrix before it is mixed with the isocyanate to produce polyurethane by reaction.

To permit dissolving the necessary quantity, the polyol and the $CO_2$ are maintained and dosed under pressure and mixed through mechanical stirring in a static mixer.

The mixture of polyol and $CO_2$ shall be maintained under some pressure during the dispersion and to maintain the mixtures in a liquid state, to avoid the formation of gas bubbles into the liquid.

The evolution of the gas and the formation of the foam starts when the pressure is released.

The rate of gas evolution depends on the rate of pressure releasing.

In general, the faster is the formation of bubbles, the bigger are the bubbles resulting in the foam.

The bubbles of the soft foam produced in block and slabstock have to be fine and very homogeneous to give the softness touch and lightness. Instead, big bubbles into the foam matrix and a structure of cell completely open have to be avoided.

To obtain a fine cellulation foam, the releasing of the pressure shall be very well controlled in time and space.

Hennecke company proposed a technology to control the releasing of pressure for polyurethane foam blown with physical carbon dioxide, based on releasing throughout a series of meshes that are sufficiently fine to control the pressure drop.

The Applicant proposed an alternative technology in the application EP 0 734 830 A2, i.e. the releasing and laying down by means of a "gatebar". As a further application, the bar can be used to form a liquid veil of uniform thickness of reactive resins that comes out along the gap and/or slot of the bar itself.

The "gatebar" is a component constructed from two sections with a top inlet, a channel running through the center of the two bars, the pressure equalizing and distribution chamber, and an outlet slot for the liquid polyurethane blend to be dispensed at full production width on to the pouring area of the slabstock production machine.

In other words, the "gatebar" is adapted to distribute the flow and equalize the slot inlet pressure and to dispense the liquid polyurethane blend at full production width on to the pouring area.

The outlet slot is determined by calculation, depending on the required pressure in the system to retain the solubility of the $CO_2$ in the blend of the various other chemicals or, when the $CO_2$ or other low temperature boiling blowing agents are not present, to form a veil of liquid resins distributed along the longitudinal extension of the gatebar.

Generally, the two pieces of the gatebar are tightly connected by bolts. This slot is set using a combination of spacer shims.

The shim can be composed by multiple layers to set the desired opening of the gate on the front.

This solution has been developed having in mind the existing frothing or pre-expansion techniques.

The latter technique, using a low-boiling blowing agent, is difficult to implement, since it is necessary to create suitable conditions for pre-expansion and distribution of the polyurethane mixture which avoid turbulence phenomena and

**EP 4 309 863 B1**

make it possible to obtain polyurethane foams having a homogeneous cell structure, devoid of bubbles, pinholes and defects.

To solve these problems, the patent EP 0 645 226 B1 by Kripton features a special lay-down device for frothing and distribution of the polyurethane mixture.

It consists in a tubular gatebar having a longitudinal slot which extends transversely to and in the flow direction of the mixture, opening out towards the cavity of a diffuser delimited by a series of side walls oriented in different directions to deviate the flow of the pre-expanding mixture as it emerges from the slot of the distribution or gatebar.

The outlet slot is determined by calculation, depending on the required pressure in the system to retain the solubility of the $CO_2$ in the blend of the various other chemicals.

This slot is set using a combination of spacer shims to create, inside the same gatebar and a mixing apparatus upstream of the frothing device, mixing conditions which enable the low boiling blowing agent, for example liquid $CO_2$, to be kept in the dissolved state while it is being mixed with the polyurethane components and the resulting mixture is flowing to the frothing device.

Furthermore, in the frothing device, the release of the blowing agent and the frothing of the mixture in the diffuser must take place in a homogeneous and controlled manner to avoid possible causes of turbulence in the polyurethane mixture while it is expanding.

When calculating the dimensions of the slot, it is necessary to consider both the pressure required inside the mixing chamber and in the gatebar to keep the blowing agent in a dissolved state.

During the release of the flow and pressure, a turbulent flow emerges from the diffuser, causing an irregular cell structure of the foam, resulting in the presence of bubbles and large cavities.

A proper improvement in stabilizing the expansion of the foam has been obtained by widening the slot near the edge where the mixture emerges towards the diffuser cavity.

The chamber distributes the flow of mixture in a crosswise direction as the gatebar is provided on one side with a longitudinal slot having side surfaces which extend transversely to the elongated pressure equalizing chamber.

The "gatebar" at the edge opposite to the pressure equalizing chamber, comprises one or both of its longitudinal side surfaces suitably slanted and diverging in the flow direction, towards the diffuser cavity.

Through the slot or gate and the slanted and diverging surfaces, the flow of the mixture exits from the bar, towards the cavity of a diffuser that comprises a series of differently oriented walls to deviate the flow of the pre-expanding polyurethane and control the expansion of the foam before its releasing to the open space of the walled conveyor at atmospheric expansion.

The gatebar is applied also to control the flowing of reactive chemicals where the blowing is performed by emulsified air or Nitrogen or other gasses finely pre-dispersed in the polyol or in other components of the mixture by stirring of the resin and air under pressure.

All these features are already known and well tested and established, but up today it is still necessary to set and fix mechanically the geometry of the slot controlling, de facto, the pressure release from the equalizing chamber.

This setting is imposed, as above mentioned, by precise spacers or shims, installed between the faces of the two pieces composing the gatebar.

These spacers have micrometric thicknesses and can be installed between the two pieces, connected by tightening screws, so to fix a very precise geometry and thickness of the slot to prevent errors of shape and/or deformations that can influence the distribution of the flow along the longitudinal dimension of the gatebar.

What is still critical for the process is this preventive setting of the gatebar that depends on the flow rate and form the apparent viscosity of the foam. The viscosity in fact can be defined as apparent because, during the release trough the slot, the formation of bubbles modifies the viscosity of the fluid flowing through the slot.

The apparent viscosity depends on the quantity of the $CO_2$ dissolved and depends on the type and temperature of the components so that it is not easy to fix in advance the setting of shims and repeated tests shall be performed to fix the correct setting.

In addition, after the introduction of the gatebar as system to control the formation of the $CO_2$ expansion, tests and trials have been undertaken to produce a gatebar that is suitable for non-$CO_2$ grades.

This non-$CO_2$ approach was followed due to the potential benefits the gatebar could bring to the slabstock foam production industry.

Key points are as follows:

- full width distribution of reactive chemical in the pouring area of the slabstock production machine;
- low chemical dwell time in the gatebar, meaning low to no buildup of polyurethanes in the gatebar;
- due to low dwell time in the gatebar the chemical coming out of the gatebar still has a reasonably low level of reactivity, meaning the viscosity is still relatively low, so it can be poured on the surface to form the block avoiding entrapping air bubbles or develop pin holes avoiding defects in the finished foam block, such as pin holes;
- by pouring a thin blade of liquid it does not entrap bubbles of gases as the cross section of the liquid poured is reduced when compared to conventional pouring.

This non-$CO_2$ gatebar has now been proven in a production environment and they perform properly showing the advantages listed above.

But one of the main constraints of the actual gatebar is due to the slot setting.

The slot width sets a back pressure in the mixing head.

On non-$CO_2$ grades the mixing head pressure can range from 0.25 to 2.5 bar, with the mixing head pressure directly affecting the cell size of the polyurethane foam, meaning the higher the pressure in the mixing head the larger the cell size produced.

With the current $CO_2$ gatebar the slot height is set using spacer shims, which works well but limits the production ability. It is known that polyurethane foam producers wish to run their production machines for as many hours per day as possible, as the most wastage from a continuous production machine takes place at start up and at shut down. To form a veil of liquid to be lay down on the travelling surface to form the slabstock block, it is very important that the veil shall be constant in thickness as well as in the specific flow rate along the extension of the gatebar. This requests that the slot shall have a uniform height and section shape all along the length of the bar.

Also, it is known that polyurethane foam producers wish to produce different foam grades during a production run, again to minimize waste.

Every different foaming formulation has its own characteristics in both reactivity, viscosity, specific gravity etc.

Moreover, the modern systems to provide the flow to produce slabstocks of foam do request the possibility to adjust and vary the flow rate during the production.

Due to the need for total flexibility from a continuous slabstock polyurethane production machine, having a laydown device which has a fixed outlet parameter i.e. a fix gatebar slot heigh, is no more fitting with the additional requirements.

EP 0 039 041 A2 discloses a mixing head with various merging points into an application beam, comprising parallel recesses extending from the merging points to a common nozzle slot, the depth of the recesses decreasing in such a manner that the same flow cross-section is retained everywhere and in this way the flow time from the merging points to the nozzle slot is at least approximately the same everywhere.

JP S61 2522 A discloses an adjusting extrusion mouthpiece secured to adjust bolts, said mouthpiece being moved to adjust the mouthpiece clearance at each position.

US 4 844 004 A discloses an apparatus for applying multiple narrow, closely spaced beads of viscous liquid to a substrate comprises first and second blades between which there is a thin shim having a plurality of parallel, closely spaced slots open to and in fluid communication with a slot cavity in one of the blades such that high pressure, viscous liquid supplied to the slot cavity exits onto the substrate from between the blades through the slots in the shim.

An object of the present invention is to provide a device that can adapt the gatebar slot opening height not only to the static setting of the flow rate, just to overpass the need of a very precise setting of the above-mentioned spacers, but also can adjust it with respect to variations of the flow rate and of the pressure of the reactive mixture arriving form the mixing head to the equalizing channel.

A further object is to provide a device for the distribution of a pre-expanded polyurethane mixture with improved features, able to provide homogeneous mixture lay-down conditions and to obtain bubble free polyurethane foams and of a commercially acceptable quality, within a wide range of throughput values.

Another object is to provide a device allowing a fine control of the exiting flow.

Another object is to provide a device that is structurally simple to avoid constructive problems which are not suitable for a product intended for mass production.

Finally, a further object is to provide a device that is easily implementable in existing systems.

<u>Summary of the invention</u>

The solution idea underlying the present invention is to provide a gatebar wherein the slot shall maintain planar walls arranged with the same geometry of the slot all along the longitudinal section, but the slot height or opening shall also be settable to be adapted to the flow rate and/or to the pressure inside the equalizer channel.

The above technical problem is solved by a variable slot gatebar for a frothing or foaming system comprising a flat first element and a second element having at least a flow recess distribution channel, the flat first element and the second element being connected at a rear surface of the second element through at least one connecting device.

The flat first element and the second element are spaced each other by a gap toward a front surface of the second element defining a, generally longitudinal, gatebar slot and defining an inner gatebar flow distribution channel for the flow distribution at the flow recess of the second element. The variable slot gatebar is adapted to release a discharging flow of a chemical reactive blend through the gatebar slot and the height, or opening, of the slot is automatically adjustable, or in other words settable by proper control means, to control the pressure of the discharging flow at the distribution channel.

Moreover, the gatebar slot has an initial portion of smaller height, delimited by parallelly arranged planar walls, followed by a widening lip portion diverging in the flow direction.

While the total flow of reactive resin is set and controlled by the control system of the pumps supplying the gatebar.

As regards their mutual arrangement, the two surfaces of the slot shall be longitudinally aligned, having a constant section of the slot itself, during the setting and during possible counter deformation related to the pressure acting inside the equalizing distribution channel as well as along the surface of the slot itself.

Advantageously, the present solution allows a uniform and precise opening of the slot according to each specific pressure condition without a continuous critical operator manual operative involvement to properly set the slot height.

According to an embodiment of the present invention, the variable slot gatebar further comprises at least one pressurizing stroke cylinder with a corresponding piston, and also preferably precision sliding drills and pins, adapted to move upward and downward the flat first element with respect to the second element adjusting the height of the gatebar slot.

Advantageously, the present solution is simple from the constructive point of view but at the same time allows a variation of the height of the slot according to small gaps and according to the pressure inside the distribution channel and the slot itself.

Preferably, the variable slot gatebar further comprises a blade support hinge to allow the pitching rotation of the flat first element with respect to the second element adjusting the width of the gatebar slot.

The blade support hinge is an effective and reliable hinging system without any back lash and any friction over a long term.

Preferably, the variable slot gatebar further comprises at least one conical spring system with a conical spring system with a conical spring or a pile of conical springs and with a load pre-charge applied tightening a screw. Advantageously, this solution provides a further element for obtaining a controlled variation of the slot opening.

More preferably, the variable slot gatebar further comprises at least one ball transfer bearing support or at least one circular ball bearing to transfer a pitching force between at least one piston and the flat element of the variable slot gatebar.

Advantageously, this allows a correct distribution of loads and a correct movement between the components.

According to an alternative embodiment, the second element comprises a setting and control recess for a control element and the variable slot gatebar further comprises a flexible bladder located in said setting and control recess, interposed between the flat first element and the second element, controlled by air pressure or liquid pressure, and adapted to produce the force balancing and controlling the pressure inside the flow distribution channel variable slot gatebar.

The bladder can be inflated through a pipe inserted into the bottom part of the bladder.

According to another embodiment, the variable slot gatebar further comprises a Z-shaped or a C shaped joint forming an elastic and no back lash pitching hinge with the shape of an elastic fork element along the complete longitudinal dimension of the flat first element, and a flatted and elastic metal tube is forced inside a frontal groove of the elastic and no back lash hinge.

Advantageously, the tube is fed with hydraulic pressure, it can dilatate and push to close the slot of the gatebar.

According to another embodiment, the variable slot gatebar further comprises a motor-controlled hinge to move upward and downward the flat first element with respect to the second element adjusting the height of the gatebar slot.

Advantageously, the motor-controlled hinge is directly connected by a gear box to the two gatebar sections to quick respond to all the pressure variations inside the gatebar.

According to another embodiment, the variable slot gatebar further comprises a hydraulically controlled piston and at least one hinge applied between the flat first element and an extension of the second element, wherein the flat first element is adapted to rotate around the hinge according to the action of the hydraulically controlled piston.

Advantageously, the hinges are well aligned by tooling and a common section of a shaft is used for controlling the rotation of the upper part during working.

According to a preferred embodiment, the variable slot gatebar further comprises a leverage mechanism connected to the flat first element and an extension of the second element connected through the hinge adapted to control the rotation of said flat first element and to permit a more precise control of the gatebar slot.

According to another embodiment, the variable slot gatebar further comprises a hydraulically controlled piston and a sliding gib, connected to the hydraulically controlled piston, comprising multiple inclined surfaces, sliding against corresponding inclined lifting surfaces.

Preferably H-shaped gibs maintain the surfaces of the flat first element parallel with the second element for the setting of the slot height.

According to another aspect of the present invention, it is provided a frothing or foaming system comprising a variable slot gatebar as described above and a control system.

So, advantageously, it is provided a system that can respond automatically to the pressure variations inside the gatebar to provide a discharging flow in perfect operative conditions.

The response and adaptation of the slot height to the variation of flow rate and pressure can be related to the pressure equilibrium between the pressure operated control system and the pressure of the reactive fluids inside the elements composing the gatebar or to the translation or rotation of the system controlling the opening of the gate or slot.

According to a preferred embodiment, the control system comprises a proportional valve controlled by a programmable logic controller.

So, advantageously, the system simply controls the pressure at the gatebar channel by means of the pressure set, so the gate continuously moves depending only on the equilibrium of the pressures between the controlling devices and the gatebar channel.

The pressures at the controlling devices are set by a proportional valve controlled by a programmable logic controller or other type of control of the plant.

According to an alternative embodiment, the control system comprises an I-to-P control function in closed loop with at least one pressure transducer applied to the gatebar channel.

Advantageously, the feature of this alternative embodiment of the system is still to control the pressure at the gatebar channel by means of the pressure set, so the gate continuously moves depending on a closed loop control that adjusts the pressure inside the gatebar channel reading this pressure and modifying the control pressure at the devices of command.

The pressures at the command devices are set by a proportional valve controlled by a programmable logic controller or other type of control of the plant in closed loop fed back by the pressure transducer inside the gatebar.

According to an alternative embodiment, the control system comprises a controller and a regulator in closed loop with a position transducer installed on the variable slot gatebar or applied on board of command devices.

Advantageously, according to a first variant, the feature of this alternative embodiment of the system can first adjust just the slot height depending on a set of position set by the operator. In this case there is a closed loop control between the opening position of the slot and the control of each of the command device.

A proportional valve or an electric control system adjusts the position of the slot at the set value.

Alternatively, according to a second variant, a second closed loop control can vary the opening depending on the value of pressure inside the gatebar. So, a second closed loop control superior to the position control modifies the values of opening depending on the values of pressure measured inside the gatebar.

This control system is more complex but more stable and not sensitive to the frictions and stick slip problems.

This double closed loop system still controls the pressure at the gatebar channel by means of the control of the gap at the slot modifying its gap slowly depending on the difference between the measured pressure and the set pressure.

The position of the command devices is set by an electrical control on the motor or by a proportional valve.

The control function is performed by the programmable logic controller or other type of control of the plant in two closed loops and internal closed loop fed back by the position of the actuator and a superior closed loop fed back by a pressure transducer reading the pressure inside the gatebar.

The starting procedure can be setting a value of opening when the system can control the gate position or, opening the gate with a clearance of e.g. 3 mm and start the delivery of the reactive mixture.

When the bar is full starting the pressure control in open or closed loop. Features and advantages of the present invention will be disclosed with reference to the enclosed drawings relating to an indicative and a nonlimiting implementation example.

Brief description of the drawings

Fig. 1 is a cross-section view of a gatebar according to the prior art;
Fig. 2 is a schematic cross-section view of a gatebar according to an embodiment of the present invention;
Fig. 3 is a schematic plan view of an embodiment of the gatebar of Fig. 2;
Fig. 4 is a cross-section view of an alternative embodiment of a gatebar according to an embodiment of the present invention;
Fig. 5 is a cross-section view of an alternative embodiment of a gatebar according to an embodiment of the present invention;
Figs. 6A and 6B are cross-section views of two variants of an alternative embodiment of a gatebar according to an embodiment of the present invention;
Fig. 7 is a cross-section view of an alternative embodiment of a gatebar according to an embodiment of the present invention;
Fig. 8 is a cross-section view of an alternative embodiment of a gatebar according to an embodiment of the present invention;

Fig. 9 is a cross-section view of an alternative embodiment of a gatebar according to an embodiment of the present invention;

Fig. 10 is a schematic elevation cross -view of an alternative embodiment of a gatebar according to an embodiment of the present invention;

Fig. 11 is a lateral cross-section view of the gatebar of Fig. 10.

In the different figures, similar elements will be identified by similar reference numbers.

Detailed description

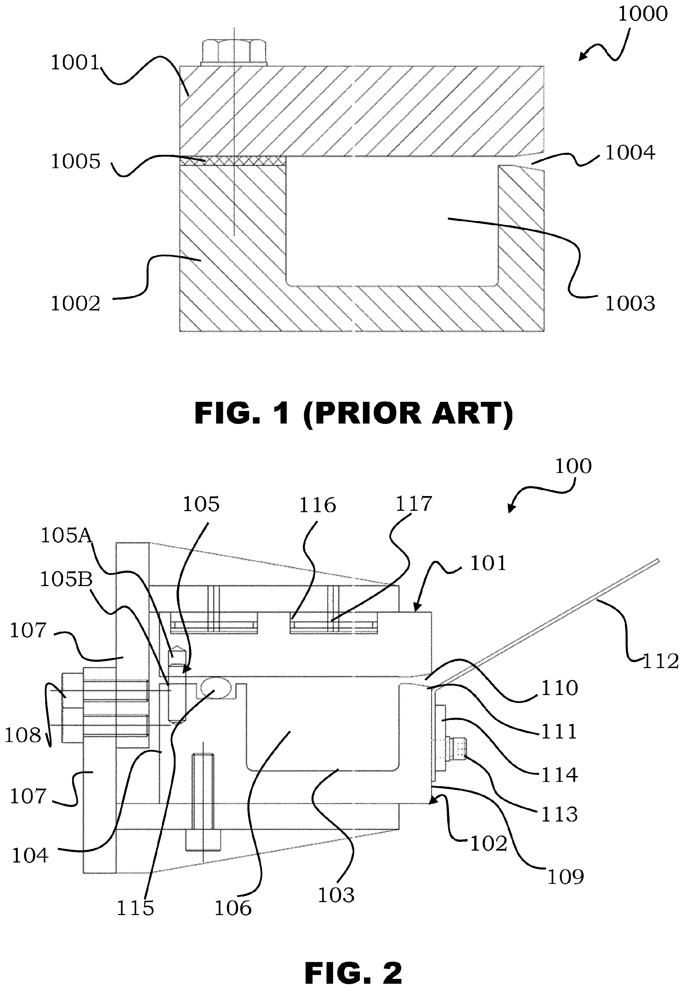

Figure 1 shows a cross-section view of a gatebar 1000 according to the prior art.

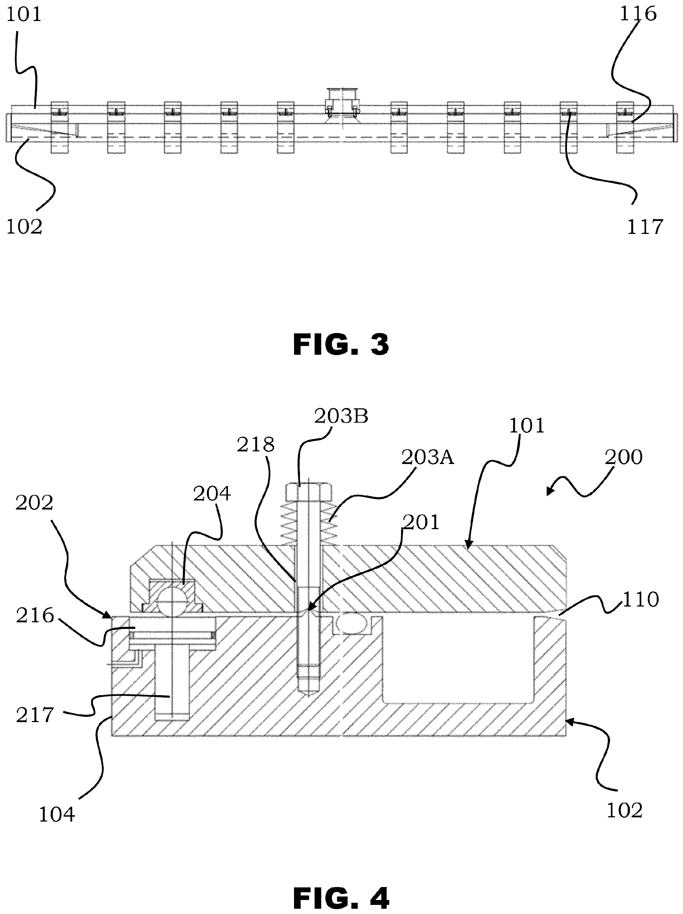

The gatebar 1000 is constructed from two bars, generally of steel, with a top inlet positioned in the middle of the bar length as represented on Fig 3.

The first bar 1001 is generally substantially flat and the second bar 1002 is generally U-shaped, defining a gatebar distribution channel 1003 running through the center of the two bars 1001, 1002, that is a pressure equalizing and flow distribution chamber.

The gatebar 1000 further comprises an outlet slot 1004 for the liquid polyurethane blend to be dispensed at full production width on to the pouring area of the slabstock production machine.

The outlet slot 1004 is determined by calculation, based on the required pressure in the system to retain the solubility of the $CO_2$ in the blend of the various other chemicals. This outlet slot 1004 is set using a combination of spacer shims 1005, that are made of flat metal sheets.

The spacer shims 1005 can be composed by multiple layers to set the desired opening of the outlet slot 1004 on the front.

The two bars 1001, 1002 of the gatebar 1000 are tightly connected by bolts.

Figure 2 shows a variable slot gatebar 100 according to a preferred embodiment of the present invention.

The variable slot gatebar 100 is a non-$CO_2$ gatebar with pressurizing mechanism typical of multiple locations along the length of the gatebar. The variable slot gatebar 100 comprises a flat first element 101 and a second element 102 having at least a flow distribution channel 106 determined by the recess 103. In this embodiment the second element 102 is substantially U-shaped.

The flat first element 101 is movable toward the second element 102 guided by a connecting and linking device 105 comprising a series of pins 105B sliding in the corresponding guiding cylindrical holes 105A and pressed by air pressure acting on a series of pistons 117. The flat first element 101 and the second element 102 are connected by means of a back C shaped structure formed by the connection at a rear surface of two holding brackets 107. The connection is done by fixing screws 108. So, the flat first element 101 and the second element 102 define an inner gatebar flow distribution channel 106 at said flow recess 103 of the second element 102.

The holding brackets 107 have each a first side abutting on a surface of the flat first element 101 and of the second element 102 opposite to the gatebar channel 106, and a second side perpendicular to the first side and at least partially overlapping to that of the other holding bracket to permit their fixing by means of the bolts 108.

The force determined by the sum of the forces caused by the pressure of the air inside the cylindrical chambers 116 is balanced by of the forces acting on the elements 101 by means of the pressure of the resins inside the distribution channel. The flat first element 101 and the second element 102 are spaced from each other by the equilibrium of the forces. The pressure inside the distribution chamber is determined by the flow rate multiplied by the value of the hydraulic restriction caused by the gap or height of the slot 110.

As the restriction is diminishing with the widening or increasing of the gap, the movement of the element 101 is stopping when the above listed forces are in equilibrium defining the height of the gatebar slot 110. by a gap toward a front surface.

In the shown embodiment, the gatebar slot 110 is provided with a widening lip portion 111 diverging in the flow direction.

According to the prior application EP 0 734 830 A2 of the same Applicant in order to obtain good laminar flow conditions, so to avoid critical turbulence conditions in the mixture emerging from the gatebar slot 110, it is advantageous to maintain very small diverging angles of the gatebar slot 110 side surfaces.

The gatebar slot 110 has an initial portion of smaller height, delimited by parallelly arranged planar walls, followed by the diverging widening lip portion 111. The ratio between the dimensions and the lengths of the two parallel and diverging portions of the gatebar slot 110 can vary from case to case and in general the diverging widening lip portion 111 can be limited to the end part of the outlet edge of the gatebar slot 110.

The variable slot gatebar 100 is thus adapted to release a discharging flow of a chemical reactive blend through the gatebar slot 110.

According to the present invention the height of the gatebar slot 110 is automatically adjustable to control a pressure of the discharging flow.

In the present embodiment a ramp-shaped flow directing element 112 is also provided at the end of the widening lip portion 111 in order to direct the discharging flow.

The flow directing element 112 is connected to a side portion of the second element 102 through a connecting bolt 113 and a bushing element 114.

A flexible seal 115 placed inside a groove provided in the second element 102 along the longitudinal and lateral borders, prevents the liquid reactive polyurethane from penetrating the space behind the gatebar flow distribution channel 106 and along the two lateral sides of the second element 102.

In the present embodiment of the variable slot gatebar 100, shown in figures 2 and 3, the adjustment of the height or gap of the gatebar slot 110 is performed by a pressurizing stroke cylinder 116 with a corresponding piston 117, preferably a plurality of pressurizing stroke cylinders 116 with a plurality of corresponding pistons 117, spaced longitudinally along the flat first element 101, and adapted to move upward and downward the flat first element 101 with respect to the second element 102.

In other words, the flat first element 101 of the variable slot gatebar 100 can move upward and downward by means of sliding cylindrical surfaces matched with a series of pins.

A possible starting procedure can be, for example, that of opening gatebar slot 110 to a maximum displacement of 3mm and commencing the production.

Figures 3 shows a view of a variant of the non-$CO_2$ gatebar with pressurizing mechanism in a version of two meters with a plurality of pressurizing stroke cylinders 116 with a plurality of corresponding pistons 117.

Figure 4 shows an alternative embodiment of the present invention wherein a variable slot gatebar 200 is provided further comprising a blade support pitching hinge 201 to allow the rotation and the movement of the flat first element 101 with respect to the second element 102, thus adjusting the gap of the gatebar slot 110.

The blade support pitching hinge is located on a rear section 202 between the flat first element 101 and the second element 102.

So, the flat first element 101 of the variable slot gatebar 200 can pitch upward and downward hinged against the blade support hinge 201. This type of hinging does not have friction effects.

At least one pressurizing stroke cylinder 216 with a corresponding piston 217, preferably a plurality of pressurizing stroke cylinders 216 with a plurality of corresponding pistons 217, preferably located in the second element 102 at said blade support hinge 201 can be controlled by air pressure or liquid pressure and act as force balancing and controlling the pressure inside the variable slot gatebar 200.

Moreover, the variable slot gatebar 200 comprises, as connecting or linking device, a conical spring system 203, with a conical spring 203A, or a pile of conical spring 203A, and with a load pre-charge applied tightening the screw 203B to overpass the composition of forces due to the pressure in the gatebar channel 106 plus the force of at least one piston controlling the closing of the variable slot gatebar 200.

So, the contact with the blade support hinge 201 is maintained.

The conical spring tightening screw 203B is inserted through a corresponding seat 218 realized in said flat first element 101 with a proper clearance and in said second element 102.

Furthermore, the variable slot gatebar 200 comprises a ball transfer bearing support 204 between the piston 217 and the flat first element 101.

So, the contact and the transferring of the force between the piston 217 with the flat first element 101 is maintained without friction involvement. Alternatively, a circular ball bearing can be used.

Also in this embodiment, a flexible seal prevents the liquid reactive polyurethane from penetrating the space behind the gatebar channel 106 and along the two lateral sides of the second element 102.

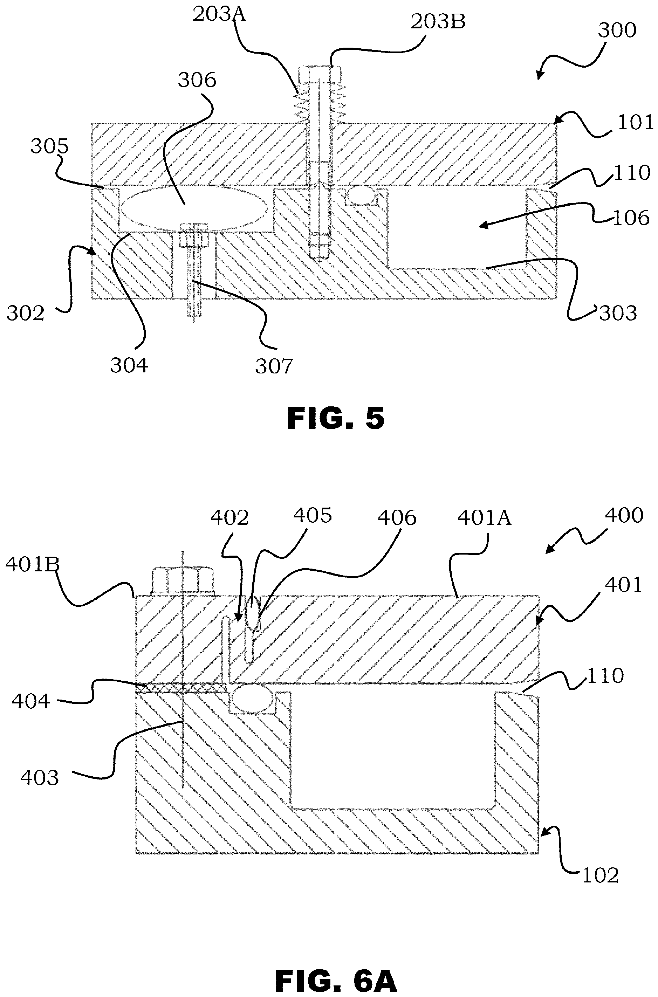

Figure 5 shows an alternative embodiment of the present invention wherein a variable slot gatebar 300 is provided.

The variable slot gatebar 300 provides a second element 302 comprising a flow recess 303 for the flow rate distribution and a control recess 304 located on a rear section 305 of the second element 302.

The variable slot gatebar 300 further comprises a flexible bladder 306 located in the control recess 304, interposed between the flat first element 101 and the second element 302, controlled by air pressure or liquid pressure and adapted to produce the force balancing and controlling the pressure inside the variable slot gatebar 300.

Also in this case, a conical spring 203A, or a pile of conical spring 203, with a load pre-charge applied tightening the screw 203B to overpass the composition of forces due to the pressure in the gatebar distribution channel 106 plus the force of the flexible bladder 306 controlling the closing of the variable slot gatebar 300.

The flexible bladder 306 is inflated through a pipe connection 307 inserted into the bottom part of the flexible bladder 306.

Also in this embodiment, a flexible seal prevents the liquid reactive polyurethane from penetrating the space behind the gatebar channel 106 between the channel and the screw 203B and along the two lateral sides of the second element 302.

Also in this embodiment, the flat first element 101 of the variable slot gatebar 300 can pitch upward and downward hinged against a similar blade support hinge 201 (not shown).

Figure 6A shows a first variant of an alternative embodiment of the present invention wherein a variable slot gatebar 400 is provided.

The variable slot gatebar 400 provides a flat first element 401 composed by two longitudinal sections, a front section 401A and a back section 401B, connected, as connecting device, by a flexible Z-shaped joint 402. The Z-shaped joint 402 forms an elastic and no back lash hinge with the shape of an elastic fork element along the complete longitudinal dimension of the flat first element 401.

The front section 401A can pitch upward due to the flexibility of the Z-shaped joint 402.

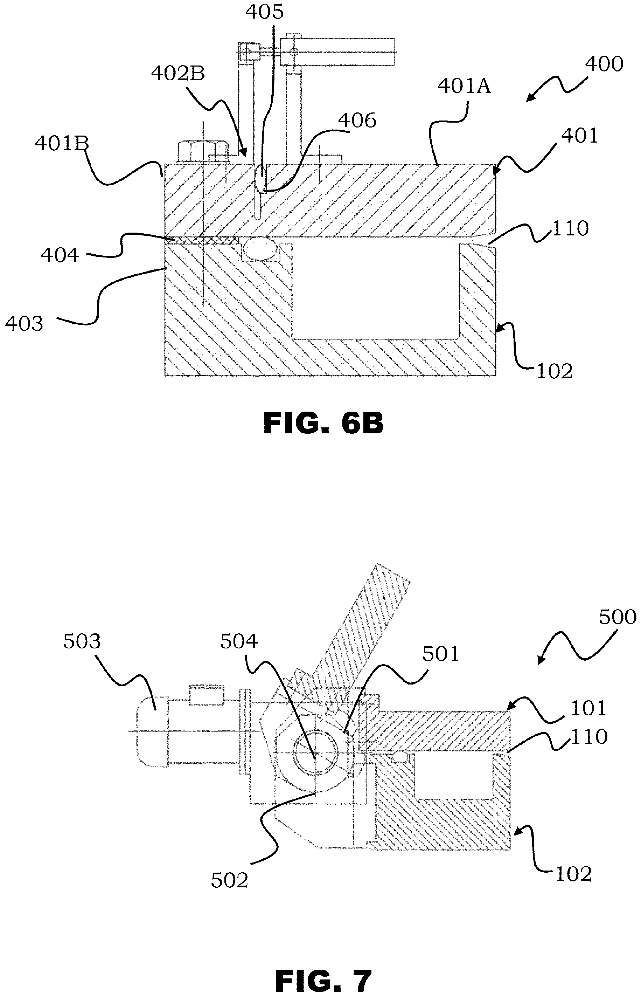

Alternatively, according to a second variant shown in Fig. 6B, it can be used a C shaped joint 402B.

The back section 401B is fixed to the second element 102 by a series of screw at a rear screwed section 403, and the preliminary value of the gatebar slot 110 is fixed by a spacer 404 under the screwed section 403. The Z-shaped joint 402 forms an elastic and no back lash hinge with the shape of an elastic fork element along the complete longitudinal dimension of the variable slot gatebar 400.

A flatted flexible metal tube 405 is forced inside a frontal groove 406 of the Z-shaped joint 402.

When the tube 405 is fed with hydraulic pressure it can expand and transfer part of the pressure to the walls of the groove 406, this force can counter-balance the pressure inside the flow distribution channel 106 and also close the gatebar slot 110.

Proper shim spacers 404 can set the preliminary gap of the delivery slot 110.

A position transducer can be fixed at the eternal surface of the element 401 to read the variation of distances of the two sides of the groove and to permit to apply a position control to better stabilize the pressure control of the gate bar. The reciprocal movement can be amplified by application of lever to support the position transducer.

Also in this embodiment, a flexible seal prevents the liquid reactive polyurethane from penetrating the space behind the gatebar channel 106 and along the two lateral sides of the second element 101.

Figure 7 shows an alternative embodiment of the present invention wherein a variable slot gatebar 500 is provided.

In the variable slot gatebar 500 the flat first element 101 and the second element 102 are connected through at least a hinge 501, or a series of hinges 501, at a rear section 502.

The hinge 501 is connected and operable by an electrical motor 503 plus gear box provided with no back lash solutions.

So, the variable slot gatebar 500 rotates the element 101 connected directly to the hinge 501 and moves upward and downward the gap of the first element 101 with respect to the second element adjusting 102 said height of the gatebar slot 110 rotating the motor-controlled hinge 501 interposed between them, depending on the pressure measured inside the gatebar channel 106.

In case of a series of hinges 501, all are well aligned by tooling and two section of a common shaft 504, as connecting device, is used for controlling the rotation of the flat first element 101 during working. Also in this embodiment, a flexible seal prevents the liquid reactive polyurethane from penetrating the space behind the gatebar channel 106 and along the two lateral sides of the second element 102.

A position transducer can be applied to the rotation motor or to the hinge rotation to read and measure the gap of the gatebar slot to apply a position control of the gap.

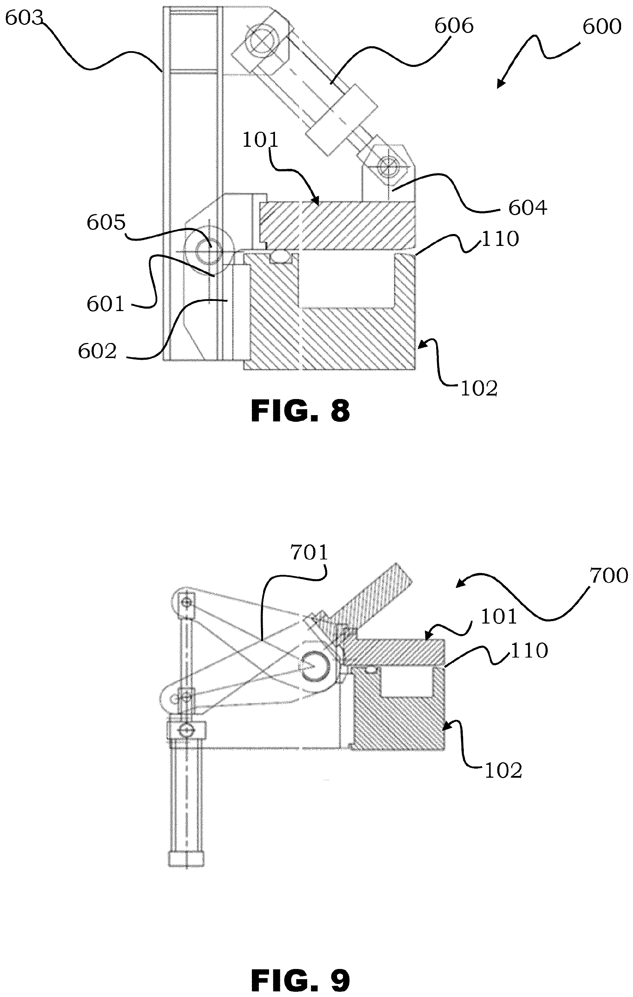

Figure 8 shows an alternative embodiment of the present invention wherein a variable slot gatebar 600 is provided.

In the variable slot gatebar 600 the flat first element 101 and the second element 102 are connected through a hinge 601, or a series of hinges 601, at a rear section 602.

The variable slot gatebar 600 further comprises a hydraulically controlled piston 606 connected at an angle by hinges between a support extension 603 located at the rear section of the variable slot gatebar 600 and a front section extension 604 of the flat first element 101 through corresponding routable connection.

So, through the action of the hydraulically controlled piston 606 the flat first element 101 is adapted to rotate around the hinge 601, adjusting the height of the gatebar slot 110 depending on the pressure measured inside the gatebar channel 106.

In case of a series of hinges 601, all are well aligned by tooling and a common shaft 605, as connecting device, is used for controlling the rotation of the flat first element 101 during working.

A position transducer can be applied to the cylinder movement or to the hinge rotation to read and measure the gap of the gatebar slot and to apply a position control of the gap.

Also in this embodiment, a flexible seal prevents the liquid reactive polyurethane from penetrating the space behind the gatebar channel 106 and along the two lateral sides of the second element 102.

Figure 9 shows an alternative embodiment of the present invention wherein a variable slot gatebar 700 is provided.

The variable slot gatebar 700 is very similar to variable slot gatebar 600 of the previous embodiment.

The variable slot gatebar 700 further comprises a leverage mechanism 701 connected to the flat first element 101 and the hinge 601 adapted to control the rotation of the flat first element 101 and to permit a more precise control of the gatebar slot 110.

Alternatively, to the hydraulic controlled piston 606 of previous embodiment it can be also used one or more pneumatic cylinders (not shown) and control directly the air pressure depending on the pressure inside the gatebar channel 106.

Also in this embodiment, a flexible seal prevents the liquid reactive polyurethane from penetrating the space behind the gatebar distribution channel 106 and along the two lateral sides of the second element 102.

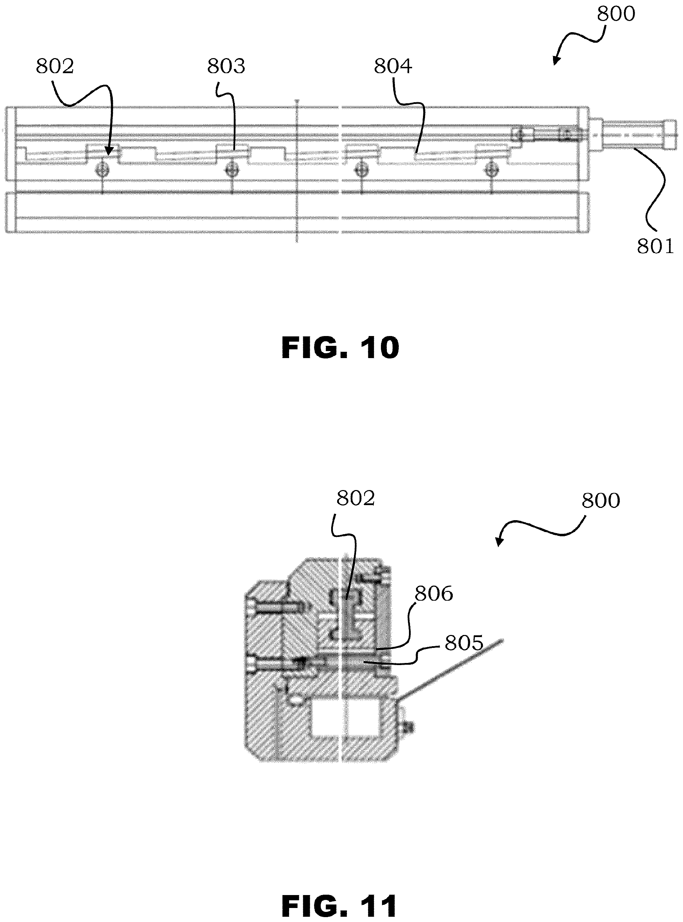

Figures 10 and 11 show an alternative embodiment of the present invention wherein a variable slot gatebar 800 is provided.

The variable slot gatebar 800 comprises a hydraulically controlled piston 801 and a sliding gib 802, as connecting device, connected to it, this last comprising multiple inclined surfaces 803 sliding against corresponding inclined lifting surfaces 804.

So, this solution provides a linear movement up and down of the flat first element 101 by means of said sliding gib 802 wherein the sliding of the inclined surfaces 803 against the inclined lifting surfaces 804, activated by the hydraulically controlled piston 801, control the opening and closing of the gatebar slot 110 depending on the pressure measured inside the gatebar channel 106 and the difference between the set pressure and the measured pressure in the gatebar channel 106.

The sliding gib 802 has a H-shaped section to permit both the opening and the closing depending on the movement of the sliding part.

As seen in Figure 11, fixed pins 805 interfaced with transversal slots elongated in vertical direction 806 oppose to the translation of the flat first element 101 and make it to move up and down. (

The H-shaped sliding gibs 802 maintains the surfaces of the flat first element 101 parallel with the second element 102.

Also in this embodiment, a flexible seal prevents the liquid reactive polyurethane from penetrating the space behind the gatebar channel 106 and along the two lateral sides of the second element 102.

Also for this embodiment, a position transducer can be applied to the cylinder movement or to the slide translation to read and measure the gap of the gatebar slot and to apply a position control of the gap.

According to the present invention a variable slot gatebar as disclosed is functionally coupled to a control system in a frothing system or a foaming system, in order to measure the pressure inside the gatebar channel 106 and respond with a correct adjusted width of the gatebar slot 110 and a correct discharging flow.

The pressure inside the gatebar channel 106 depends on the chemical blend flowing outside the gatebar slot 110.

The pressurization system is based on the control of the chemical blend flowing through the variable slot gatebar, which pressure naturally creates forces inside the gatebar that can be used to open the gatebar slot 110.

The control system sets the required pressure preselected and based on the foam formulation.

A possible starting procedure can be, as above mentioned, opening gatebar slot 110 to a maximum displacement of 3 mm and commencing the production.

An alternative start sequence is to provide a matrix to the control software where different flow rates, formulations, gas addition, viscosities and corresponding openings of the gatebar slot 110 are contained, and the software checks the new values of the formulation, makes a linear interpolation within the values set and prepositions the opening of the gatebar slot 110 before starting the flow delivery.

The pressure will then be applied to the top of the variable slot gatebar until the set pressure required is achieved.

The control system then enables the closed loop pressure control with a slow increasing the gain of the control.

When the closed loop is totally enabled the control system will constantly monitors, adjusts and controls the gatebar pressure.

Taking as a reference example a two-meters wide variable slot gatebar using a plurality of pressurizing stroke cylinder as in the first embodiment disclosed above, it is possible to provide a sample of pressurization calculations.

Forces to be calculated are the top and bottom faces of the gatebar distribution channel 106, due to the vertical movement required.

$$Channel\ width\ \mathrm{Wc} = 70\ \mathrm{mm}$$

$$Channel\ legth\ \mathrm{Lc} = 2000\ \mathrm{mm}$$

$$Area\ of\ one\ channel\ face = \mathrm{Sc} = \mathrm{Wc} * \mathrm{Lc} = 140000\ \mathrm{mm}^2$$

Actual pressure in the gatebar needs to be between 0,2 and 1 bar, that is between 0,02 N/mm² (minimum pressure or "min pressure") and 0,1 N/mm² (maximum pressure or "max pressure").

Therefore:

$$Min\ force\ exerted\ on\ the\ gatebar\ in\ a\ vertical\ axis = 0{,}02\ ^{N}/_{mm2} * Sc = 0{,}02Sc$$

$$Max\ force\ exerted\ on\ the\ gatebar\ in\ a\ vertical\ axis = 0{,}1\ ^{N}/_{mm2} * Sc = 0{,}1Sc$$

$$0{,}02Sc = 140000 * 0{,}02 = 2800\ N$$

$$0{,}1Sc = 140000 * 0{,}1 = 14000\ N$$

Calculating the area required using pressurizing stroke cylinder, assuming maximum operating pressure of the pressurizing stroke cylinder are 5 bar, that is 0,5 N/ mm²

$$Total\ pressurizing\ stroke\ cylinder\ surface = Tsp = {}^{0{,}1Sc}/_{0{,}5} = 28000\ mm2$$

Assuming also that a single pressurizing stroke cylinder can have a diameter between 30 mm ($D_{min}$) and 80 mm ($D_{max}$)

$$Spmin = Dmin2 * {}^{3{,}14}/_{4}$$

$$Spmax = Dmax2 * {}^{3{,}14}/_{4}$$

The number of pressurizing stroke cylinders depending on their diameter should be:

$$0{,}2 * {}^{Sc}/_{Spmin}$$

$$0{,}2 * {}^{Sc}/_{Spmax}$$

Supposing a pressurizing stroke cylinder diameter of 40 mm, the number of pressurizing stroke cylinders would be:

$$\frac{28000}{A = 40^2 * {}^{3{,}14}/_{4}} = 22{,}3$$

Rounded to 24 pressurizing stroke cylinders.

As said above, this is only a calculation based on exemplary assumptions and on an exemplary embodiment to explain how a control system for the frothing or foaming system according to the present invention could work.

Depending on the needs and on the contingent preference according to the different embodiment, the present invention provides four embodiments of a control system to be operatively coupled to a variable slot gatebar.

According to a first embodiment, it is provided a control system of the pressure inside the gatebar distribution channel 106 adapted to control the pressure at the gatebar channel 106 by means of the pressure set, depending on the type of variable slot gatebar, into the pressurizing stroke cylinders or into the bladder or into a flatted flexible metal tube or into the pneumatic or hydraulic cylinders.

So, the gatebar slot 110 continuously changes in width depending only on the equilibrium of the pressures between the controlling devices and the gatebar channel 106.

The pressures at the controlling devices are set by a proportional valve controlled by the programmable logic controller or other type of control of the plant.

The disturbances introduced by the friction of the pistons and of the sliding parts like the pins during the movement can be annulled by a dither vibration applied to the flat first element.

According to a second embodiment, it is provided a control system with a I-to-P control function in closed loop with a flush separation diaphragm pressure transducer applied to the gatebar channel 106 adapted to control the pressure at the gatebar channel 106 by means of the pressure set, depending on the type of variable slot gatebar, into the pressurizing stroke cylinders or into the bladder or into a flatted flexible metal tube or into the pneumatic or hydraulic cylinders.

So, the gatebar slot 110 continuously changes in width depending on a closed loop control that adjusts the pressure inside the gatebar channel 106 reading this pressure and modifying the control pressure at the devices of command.

The pressures at the command devices are set by a proportional valve controlled by a programmable logic controller or other type of control of the plant in closed loop fed back by the pressure transducer inside the gatebar.

According to the third and the fourth embodiments, it is provided a control system of the pressure inside the gatebar channel 106 passing through the setting of the precise opening of the gatebar slot 110 in closed loop with a position transducer installed on the variable slot gatebar or on board of the command and control devices.

According to the third embodiment, the control system first adjusts just the gatebar slot 110 depending on a set of position set by the operator.

In this case there is a closed loop control between the position, generally the opening, of the gatebar slot 110 and the control of each of the actuation device having a position transducer, and thus adjusting just the position of the actuator.

A proportional valve or an electric control system adjusts the position of the gatebar slot at the set value.

According to the fourth embodiment, the control system provides a second closed loop control that varies the opening depending on the value of pressure inside the variable slot gatebar. The second closed loop control superior to the position control sets new values of opening depending on the values of pressure measured inside the distribution channel or at the entrance of the distribution channel of the variable slot gatebar.

This control system is more complex but more stable and not sensitive to the frictions and stick slip problems.

This double closed loop system still controls the pressure at the gatebar channel 106 by means of the control of the gap at the gatebar slot 110 modifying its gap slowly depending on the difference between the measured pressure and the set pressure.

For example, using the variable slot gatebar 600, the control system opens or closes the gatebar slot 110 in closed loop of position control of the piston depending on the difference between the set pressure and the measured pressure.

Differently, using the variable slot gatebar 500, the control system opens or closes the gatebar slot 110 in closed loop of rotation control positioning the flat first element 101 for example by means of an encoder connected to the rotating shaft. A further closed loop control opens of closed the gatebar slot 110 depending on the difference between the set pressure and the measured pressure.

The position of the actuators and command devices is set by an electrical control on the motor or by a proportional valve.

The control function is performed by a programmable logic controller or other type of control of the system by two closed loops an internal closed loop fed back by the position of the actuator and a superior closed loop fed back by a pressure transducer reading the pressure of the resin inside or at the entrance of the distribution channel of the variable slot gatebar.

The starting procedure can be setting a value of the opening in the case of the system that can control the gate position or opening the gate with a clearance of 3 mm on a mechanical stop and start the delivery of the reactive mixture.

When the bar is full, generally by a time delay, it starts the pressure control in open or closed loop.

Advantageously, the present invention allows to control the discharging flow automatically and precisely from the gatebar.

Further advantageously, the present invention provides embodiments adapted to be implemented in pre-existing frothing or foaming systems and some components can be still used.

Moreover, the present invention is not constrained by a continuous human intervention.

Finally, advantageously the present invention does not require complex maintenance procedures.

The skilled person will understand that the embodiment described can be subjected to various changes and variations, according to specific and contingent needs, all included within the scope of protection of the invention, as defined by the following claims.

**EP 4 309 863 B1**

**Claims**

1. Variable slot gatebar (100, 200, 300, 400, 500, 600, 700, 800) adapted for releasing a discharging flow of a frothing or foaming chemical reactive blend system comprising a flat first element (101, 401), and a second element (102, 202, 302) having at least a flow recess (103, 303),

   said flat first element (101, 401) and said second element (102, 202, 302,) being connected at a rear surface (104) of said second element (102, 202, 302) through at least one connecting device (105, 203, 402, 504, 605, 802), said flat first element (101, 401) and said second element (102, 202, 302) being spaced from each other by a gap toward a front surface (109) of said second element (102, 202, 302) defining a gatebar slot (110), wherein said flat first element (101, 401) and said second element (102, 202, 302) define an inner gatebar flow distribution channel (106) at said flow recess (103, 303) of said second element (102, 202, 302), said variable slot gatebar (100, 200, 300, 400, 500, 600, 700, 800) being adapted to release an output flow of a chemical reactive blend through said gatebar slot (110), wherein the height of said gatebar slot (110) is automatically adjustable to control a pressure of said output flow at the distribution channel (106), and **characterized in that** said gatebar slot (110) has an initial portion of smaller height, delimited by parallelly arranged planar walls, followed by a widening lip portion (111) diverging in the flow direction.

2. Variable slot gatebar (100, 200, 600, 700) according to claim 1, further comprising at least one pressurizing stroke cylinder (116, 216, 606) with a corresponding piston (117, 217), adapted to move upward and downward or rotate along a hinging device said flat first element (101, 401) with respect to said second element (102, 202, 302), thus adjusting said height of said gatebar slot (110).

3. Variable slot gatebar (200, 300) according to claim 1, further comprising a blade support hinge (201) to allow the pitching rotation of said flat first element (101) with respect to said second element (202, 302), thus adjusting said height of said gatebar slot (110).

4. Variable slot gatebar (200, 300) according to claim 3, further comprising at least one conical spring system (203) with a conical spring (203A) or a pile of conical springs and with a load pre-charge applied tightening a screw (203B).

5. Variable slot gatebar (200) according to claim 4, further comprising at least one ball transfer bearing support (204) or at least one circular ball bearing to transfer a pitching force between at least one piston (217) and said flat first element (101) of the variable slot gatebar (200).

6. Variable slot gatebar (300) according to claim 4, wherein said second element (302) comprises a setting and control recess (304) for a control element, further comprising a flexible bladder (306) located in said setting and control recess (304), interposed between said flat first element (101) and said second element (302), controlled by air pressure or liquid pressure and adapted to produce the force balancing and controlling the pressure inside the flow distribution channel (106) of the variable slot gatebar (300).

7. Variable slot gatebar (400) according to claim 1, further comprising:

   a Z-shaped joint (402) or a C shaped joint 402B forming an elastic and no back lash pitching hinge with the shape of an elastic fork element along the complete longitudinal dimension of said flat first element (401), and a flatted metal tube (405) forced inside a frontal groove (406) of said elastic and no back lash hinge, the flatted metal tube being generally provided with a connection to a source of hydraulic pressure.

8. Variable slot gatebar (500) according to claim 1, further comprising a motor-controlled hinge (501) to move upward and downward said flat first element (101) with respect to said second element (102), thus adjusting said height of said gatebar slot (110).

9. Variable slot gatebar (600) according to claim 1, further comprising a hydraulically controlled piston (606) and at least one hinge (601) between said flat first element (101) and an extension of said second element (102), wherein said flat first element (101) is adapted to rotate around said hinge (601) according to the action of said hydraulically controlled piston (606).

10. Variable slot gatebar (700) according to claim 9, further comprising a leverage mechanism (701) connected to said flat first element (101) and an extension of the second element connected through said hinge (601) adapted to control the rotation of said flat first element (101) and to permit a more precise control of the gatebar slot (110).

11. Variable slot gatebar (800) according to claim 1, further comprising a hydraulically controlled piston (801) and a sliding gib (802), connected to said hydraulically controlled piston (801), comprising multiple inclined surfaces (803) sliding against corresponding inclined lifting surfaces (804).

12. Frothing or foaming system comprising a variable slot gatebar (100, 200, 300, 400, 500, 600, 700, 800) according to any one of previous claims 1 to 11 and a control system.

13. Frothing or foaming system according to claim 12, wherein said control system comprises a proportional valve controlled by a programmable logic controller.

14. Frothing or foaming system according to claim 12, wherein said control system comprises an I-to-P control function in closed loop with at least one pressure transducer applied to the gatebar distribution channel or to the supply of the gatebar distribution channel.

15. Frothing or foaming system according to claim 12, wherein said control system comprises a controller and a regulator in closed loop with a position transducer installed on said variable slot gatebar or on board of command and control devices.


**Patentansprüche**

1. Variabler Schlitzgatterschieber (100, 200, 300, 400, 500, 600, 700, 800) angepasst zum Freigeben eines Ausflusses eines schäumenden oder schaumbildenden chemisch reaktiven Mischsystems, umfassend ein flaches erstes Element (101, 401) und ein zweites Element (102, 202, 302) mit mindestens einer Strömungsaussparung (103, 303), wobei das flache erste Element (101, 401) und das zweite Element (102, 202, 302) an einer Rückseite (104) des zweiten Elements (102, 202, 302) über mindestens eine Verbindungsvorrichtung (105, 203, 402, 504, 605, 802) verbunden sind,

wobei das flache erste Element (101, 401) und das zweite Element (102, 202, 302) durch einen Spalt voneinander beabstandet sind, der zu einer Vorderseite (109) des zweiten Elements (102, 202, 302) hin verläuft und einen Gatterschieberschlitz (110) definiert,
wobei das flache erste Element (101, 401) und das zweite Element (102, 202, 302) einen inneren Gatterschieber-Strömungsverteilungskanal (106) an der Strömungsaussparung (103, 303) des zweiten Elements (102, 202, 302) definieren, der variable Schlitzgatterschieber (100, 200, 300, 400, 500, 600, 700, 800) so ausgelegt ist, dass er einen Ausgangsstrom einer chemisch reaktiven Mischung durch den Gatterschieberschlitz (110) freigibt, wobei die Höhe des Gatterschieberschlitzes (110) automatisch einstellbar ist, um einen Druck des Ausgangsstroms am Verteilungskanal (106) zu steuern, und **dadurch gekennzeichnet, dass** der Gatterschieberschlitz (110) einen Anfangsabschnitt mit geringerer Höhe aufweist, der durch parallel angeordnete ebene Wände begrenzt ist, gefolgt von einem sich in Strömungsrichtung verbreiternden Lippenabschnitt (111).

2. Variabler Schlitzgatterschieber (100, 200, 600, 700) nach Anspruch 1, der ferner mindestens einen Druckhubzylinder (116, 216, 606) mit einem entsprechenden Kolben (117, 217) umfasst, der so ausgelegt ist, dass er sich entlang einer Gelenkvorrichtung des flachen ersten Elements (101, 401) in Bezug auf das zweite Element (102, 202, 302) auf und ab bewegt oder dreht und so die Höhe des Schlitzes (110) des Gatterschiebers einstellt.

3. Variabler Schlitzgatterschieber (200, 300) nach Anspruch 1, der ferner ein Blattstützgelenk (201) umfasst, um die Neigungsdrehung des flachen ersten Elements (101) in Bezug auf das zweite Element (202, 302) zu ermöglichen und so die Höhe des Schlitzes (110) des Gatterschiebers einzustellen.

4. Variabler Schlitzgatterschieber (200, 300) nach Anspruch 3, der ferner mindestens ein konisches Federsystem (203) mit einer konischen Feder (203A) oder einem Stapel konischer Federn und mit einer Vorspannkraft umfasst, die durch Anziehen einer Schraube (203B) aufgebracht wird.

5. Variabler Schlitzgatterschieber (200) nach Anspruch 4, der ferner mindestens eine Kugelumlauflagerhalterung (204) oder mindestens ein kreisförmiges Kugellager umfasst, um eine Nickkraft zwischen mindestens einem Kolben (217) und dem flachen ersten Element (101) des Variabler Schlitzgatterschiebers (200) zu übertragen.

6. Variabler Schlitzgatterschieber (300) nach Anspruch 4, wobei das zweite Element (302) eine Einstell- und Steueraussparung (304) für ein Steuerelement umfasst, ferner umfassend

   eine flexible Blase (306), die sich in der Einstell- und Steueraussparung (304) befindet, zwischen dem flachen ersten Element (101) und dem zweiten Element (302) angeordnet ist, durch Luftdruck oder Flüssigkeitsdruck gesteuert wird und dazu ausgelegt ist, die Kraft zu erzeugen, die den Druck im Strömungsverteilungskanal (106) des variablen Schlitzgatterschiebers (300) ausgleicht und steuert.

7. Variabler Schlitzgatterschieber (400) nach Anspruch 1, der ferner umfasst:

   ein Z-förmiges Gelenk (402) oder ein C-förmiges Gelenk 402B, das ein elastisches und spielfreies Nickscharnier mit der Form eines elastischen Gabelelements entlang der gesamten Längsabmessung des flachen ersten Elements (401) bildet, und
   ein abgeflachtes Metallrohr (405), das in eine vordere Nut (406) des elastischen und spielfreien Gelenks gedrückt wird, wobei das abgeflachte Metallrohr im Allgemeinen mit einer Verbindung zu einer Hydraulikdruckquelle versehen ist.

8. Variabler Schlitzgatterschieber (500) nach Anspruch 1, der ferner ein motorisch gesteuertes Scharnier (501) umfasst, um das flache erste Element (101) in Bezug auf das zweite Element (102) nach oben und unten zu bewegen und so die Höhe des Schlitzes (110) des Gatterschiebers einzustellen.

9. Variabler Schlitzgatterschieber (600) nach Anspruch 1, der ferner einen hydraulisch gesteuerten Kolben (606) und mindestens ein Scharnier (601) zwischen dem flachen ersten Element (101) und einer Verlängerung des zweiten Elements (102) umfasst, wobei das flache erste Element (101) so ausgelegt ist, dass es sich entsprechend der Wirkung des hydraulisch gesteuerten Kolbens (606) um das Scharnier (601) dreht.

10. Variabler Schlitzgatterschieber (700) nach Anspruch 9, der ferner einen Hebelmechanismus (701) umfasst, der mit dem flachen ersten Element (101) und einer Verlängerung des zweiten Elements verbunden ist, die über das Scharnier (601) verbunden ist, das dazu ausgelegt ist, die Drehung des flachen ersten Elements (101) zu steuern und eine präzisere Steuerung des Gatterschieberschlitzes (110) zu ermöglichen.

11. Variabler Schlitzgatterschieber (800) nach Anspruch 1, der ferner einen hydraulisch gesteuerten Kolben (801) und einen mit dem hydraulisch gesteuerten Kolben (801) verbundenen Gleitkeil (802) umfasst, der mehrere geneigte Flächen (803) aufweist, die gegen entsprechende geneigte Hebeflächen (804) gleiten.

12. Aufschäum- oder Schaumbildungssystem, umfassend einen variablen Schlitzgatterschieber (100, 200, 300, 400, 500, 600, 700, 800) nach einem der vorhergehenden Ansprüche 1 bis 11 und ein Steuersystem.

13. Schaumbildungs- oder Aufschäumungssystem nach Anspruch 12, wobei das Steuersystem ein Proportionalventil umfasst, das von einer speicherprogrammierbaren Steuerung gesteuert wird.

14. Schaumbildungs- oder Aufschäumungssystem nach Anspruch 12, wobei das Steuersystem eine I-P-Regelfunktion in einem geschlossenen Regelkreis mit mindestens einem Druckwandler umfasst, der am Verteilerkanal des Gatterschiebers oder an der Zufuhr des Verteilerkanals des Gatterschiebers angebracht ist.

15. Schaumbildungssystem nach Anspruch 12, wobei das Steuersystem eine Steuerung und einen Regler in einem geschlossenen Regelkreis mit einem Positionswandler umfasst, der an dem variablen Schlitzgatterschieber oder an Bord von Befehls- und Steuergeräten installiert ist.

**Revendications**

1. Barre de fermeture à fente variable (100, 200, 300, 400, 500, 600, 700, 800) adaptée pour dégager un flux de décharge d'un système de mélange réactif chimique moussant ou pré-moussant comprenant un premier élément plat (101, 401), et un deuxième élément (102, 202, 302) ayant au moins un évidement d'écoulement (103, 303),

   ledit premier élément plat (101, 401) et ledit deuxième élément (102, 202, 302,) étant connectés au niveau d'une surface arrière (104) dudit deuxième élément (102, 202, 302) par au moins un dispositif de connexion (105, 203, 402, 504, 605, 802),

ledit premier élément plat (101, 401) et ledit deuxième élément (102, 202, 302) étant espacés l'un de l'autre par un écart vers une surface avant (109) dudit deuxième élément (102, 202, 302) définissant une fente de barre de fermeture (110),

ledit premier élément plat (101, 401) et ledit deuxième élément (102, 202, 302) définissant un canal interne de distribution du flux de la barre de fermeture (106) au niveau dudit évidement d'écoulement (103, 303) dudit deuxième élément (102, 202, 302),

ladite barre de fermeture à fente variable (100, 200, 300, 400, 500, 600, 700, 800) étant adaptée pour dégager un flux de sortie d'un mélange réactif chimique à travers ladite fente de barre de fermeture (110),

la hauteur de ladite fente de barre de fermeture (110) étant ajustable automatiquement pour contrôler une pression dudit flux de sortie au niveau du canal de distribution (106), et **caractérisée**

**en ce que** ladite fente de barre de fermeture (110) comporte une portion initiale ayant une hauteur inférieure, délimitée par des parois planes disposées parallèlement, suivie par une portion de rebord élargie (111) divergeant dans la direction d'écoulement.

2. Barre de fermeture à fente variable (100, 200, 600, 700) selon la revendication 1, comprenant en outre au moins un vérin de pressurisation (116, 216, 606) avec un piston (117, 217) correspondant, adapté pour déplacer vers le haut et vers le bas ou faire tourner le long d'un dispositif d'articulation ledit premier élément plat (101, 401) par rapport audit deuxième élément (102, 202, 302), ajustant ainsi ladite hauteur de ladite fente de barre de fermeture (110).

3. Barre de fermeture à fente variable (200, 300) selon la revendication 1, comprenant en outre une charnière de support de lame (201) pour permettre la rotation de tangage dudit premier élément plat (101) par rapport audit deuxième élément (202, 302), ajustant ainsi ladite hauteur de ladite fente de barre de fermeture (110).

4. Barre de fermeture à fente variable (200, 300) selon la revendication 3, comprenant en outre au moins un système à ressort conique (203) avec un ressort conique (203A) ou une pile de ressorts coniques et avec une précontrainte appliquée en serrant une vis (203B).

5. Barre de fermeture à fente variable (200) selon la revendication 4, comprenant en outre au moins un support de roulement à billes de transfert (204) ou au moins un roulement à billes circulaire pour transférer une force de tangage entre au moins un piston (217) et ledit premier élément plat (101) de la barre de fermeture à fente variable (200).

6. Barre de fermeture à fente variable (300) selon la revendication 4, dans laquelle ledit deuxième élément (302) comprend un évidement de réglage et contrôle (304) pour un élément de contrôle, comprenant en outre une poche flexible (306) située dans ledit évidement de réglage et contrôle (304), interposée entre ledit premier élément plat (101) et ledit deuxième élément (302), contrôlée par pression d'air ou pression de liquide et adaptée pour produire la force équilibrant et contrôlant la pression à l'intérieur du canal de distribution du flux (106) de la barre de fermeture à fente variable (300).

7. Barre de fermeture à fente variable (400) selon la revendication 1, comprenant en outre:

un joint en Z (402) ou un joint en C 402B formant une charnière de tangage élastique et sans jeu ayant la forme d'un élément à fourche élastique sur toute la dimension longitudinale dudit premier élément plat (401), et
un tube métallique aplati (405) forcé dans une rainure frontale (406) de ladite charnière élastique et sans jeu, le tube métallique aplati étant généralement pourvu d'une connexion à une source de pression hydraulique.

8. Barre de fermeture à fente variable (500) selon la revendication 1, comprenant en outre une charnière motorisée (501) pour déplacer vers le haut et vers le bas ledit premier élément plat (101) par rapport audit deuxième élément (102), ajustant ainsi ladite hauteur de ladite fente de barre de fermeture (110).

9. Barre de fermeture à fente variable (600) selon la revendication 1, comprenant en outre un piston à commande hydraulique (606) et au moins une charnière (601) entre ledit premier élément plat (101) et une extension dudit deuxième élément (102), ledit premier élément plat (101) étant adapté pour tourner autour de ladite charnière (601) en fonction de l'action dudit piston à commande hydraulique (606).

10. Barre de fermeture à fente variable (700) selon la revendication 9, comprenant en outre un mécanisme à levier (701) connecté audit premier élément plat (101) et à une extension du deuxième élément connectée par ladite charnière

**EP 4 309 863 B1**

(601) adapté pour contrôler la rotation dudit premier élément plat (101) et pour permettre un contrôle plus précis de la fente de barre de fermeture (110).

11. Barre de fermeture à fente variable (800) selon la revendication 1, comprenant en outre un piston à commande hydraulique (801) et une coulisse de guidage (802), connectée audit piston à commande hydraulique (801), comprenant plusieurs surfaces inclinées (803) coulissant contre des surfaces portantes inclinées (804) correspondantes.

12. Système de moussage ou de pré-moussage comprenant une barre de fermeture à fente variable (100, 200, 300, 400, 500, 600, 700, 800) selon l'une quelconque des revendications précédentes 1 à 11 et un système de contrôle.

13. Système de moussage ou de pré-moussage selon la revendication 12, dans lequel ledit système de contrôle comprend une vanne proportionnelle contrôlée par un contrôleur logique programmable.

14. Système de moussage ou de pré-moussage selon la revendication 12, dans lequel ledit système de contrôle comprend une fonction de contrôle I-à-P en boucle fermée avec au moins un transducteur de pression appliqué au canal de distribution de la barre de fermeture ou à l'alimentation du canal de distribution de la barre de fermeture.

15. Système de moussage ou de pré-moussage selon la revendication 12, dans lequel ledit système de contrôle comprend un contrôleur et un régulateur en boucle fermée avec un transducteur de position installé sur ladite barre de fermeture à fente variable ou à bord des dispositifs de commande et contrôle.

17

# FIG. 1 (PRIOR ART)

# FIG. 2

**FIG. 3**

**FIG. 4**

**FIG. 5**

**FIG. 6A**

**FIG. 6B**

**FIG. 7**

**FIG. 8**

**FIG. 9**

**FIG. 10**

**FIG. 11**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0734830 A2
- EP 0645226 B1
- EP 0039041 A2
- JP S612522 A
- US 4844004 A